# EUROPEAN PATENT SPECIFICATION

(11) **EP 3 115 574 B1**
(45) Date of publication and mention of the grant of the patent: **30.06.2021**
(21) Application number: 16178744.5
(22) Date of filing: 08.07.2016
(51) Int. Cl.: F02B 37/013, F02B 37/18, F02B 37/02, F02B 37/24

(54) **A SYSTEM FOR TREATING EXHAUST GASES (ATS) AND SUPERCHARGING OF AN INTERNAL COMBUSTION ENGINE IN PARTICULAR OF AN AGRICULTURAL VEHICLE AND AGRICULTURAL VEHICLE COMPRISING THE SYSTEM**
SYSTEM ZUR BEHANDLUNG VON ABGASEN UND AUFLADUNG EINES VERBRENNUNGSMOTORS INSBESONDERE EINES LANDWIRTSCHAFTLICHEN FAHRZEUGS UND LANDWIRTSCHATLICHES FAHRZEUG MIT SOLCH EINEM SYSTEM
SYSTÈME DE TRAITEMENT DE GAZ D'ÉCHAPPEMENT ET DE SURALIMENTATION D'UN MOTEUR À COMBUSTION INTERNE EN PARTICULIER D'UN VÉHICULE AGRICOL ET VÉHICULE AGRICOL COMPRENNANT UN TEL SYSTÈME

(30) Priority: 08.07.2015 IT UB20152004
(43) Date of publication of application: 11.01.2017
(73) Proprietor: FPT Industrial S.p.A., 10156 Torino (IT)
(72) Inventor: D'EPIRO, Clino, 10091 ALPIGNANO (IT)
(74) Representative: Franzolin, Luigi

(56) References cited:
- EP-A1- 1 865 176
- WO-A1-91/18192
- DE-A1-102010 005 813
- GB-A- 2 507 968
- US-A1- 2013 167 509
- US-A1- 2015 046 064
- None

## Description

### Field of the invention

The present invention relates to the field of the systems for treating exhaust gases (ATS) and for supercharging of an internal combustion engine of an agricultural vehicle, and to an agricultural vehicle comprising the treating and supercharging system.

### Prior art

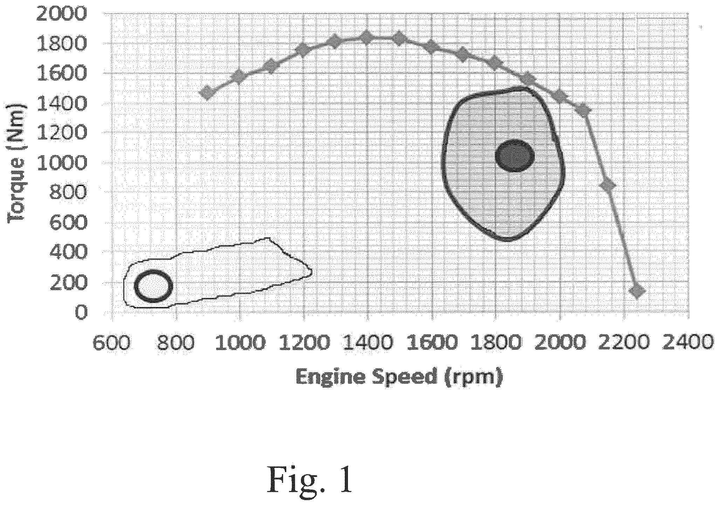

In agricultural vehicles, such as tractors and earth-moving machines, the internal combustion engine runs at about maximum power for about 80% of their operating time, while for the remaining time (20%), the internal combustion engine supplies a very low power, namely about 20-40% of the maximum power at a low rpm. Generally, this low power is supplied when the machine moves to its operating site. Figure 1 shows a diagram in which the abscissa axis indicates the rpm and the ordinate axis indicates the torque. Two further areas are marked, namely a lower left area corresponding to the aforesaid low power condition and a second upper right area corresponding to the aforesaid high power condition.

The conventional supercharging systems with a single turbocharger represent a compromise between a good response to the torque demand starting from a low rpm, namely in a so-called "transient" condition, and a good efficiency at maximum power.

It is well known that a small turbocharger has a good dynamic response, while a large turbocharger is more efficient at the engine maximum power, but is inefficient in a transient condition.

Although the low power time is quite limited, if compared to the whole operating time of an agricultural machine, the turbocharger size cannot be suited for the maximum power of the internal combustion engine not to excessively jeopardize the performance of the vehicle in the transient condition.

A variable geometry turbocharger (VGT) has a better transient response, but does not significantly improve fuel consumption at maximum power and speed, because the turbine efficiency rapidly decreases with the orientation angles of the blades away from the customary target point, which is generally an intermediate operating point of the internal combustion engine.

5 efficiency points of the turbine correspond to 1 efficiency point of the internal combustion engine. Therefore, variable geometry turbines have not much success in agricultural implementations.

Dual-stage supercharging systems are advantageous if the compressed air cooling is provided between the two compression stages in series, but the transient response is worse than the implementation of a single variable geometry turbine.

Another possible scheme involves a serial dual-stage supercharging system with a variable geometry turbine, possibly with an intercooler between the compressors arranged on the intake line. The variable geometry turbine reduces losses resulting from a high counterpressure needed to ensure a relatedly high degree of EGR recirculation.

In fact, by lowering the NOx at the exhaust outlet, the EGR reduces the size of the components defining the ATS.

Therefore, the EGR is the only system that reduces the ATS overall volume, although it involves a very slight increase in the DPF volume.

Therefore, the dual-stage serial systems are inefficient from the point of view of the transient response, because the inertia of two turbines on the same enthalpic jump is always greater than the inertia of a single turbine.

Examples of dual stage systems are disclosed in DE102010005813A1, EP1865176A1, and GB2507968A.

### Summary of the invention

The main purpose of the present invention is optimizing the operation of the ATS and of the supercharging system of an internal combustion engine implemented in an agricultural vehicle or in an operating machine.

The term operating machine means a construction machine, generally not intended for road use.

The basic idea of the present invention is implementing two supercharger stages in series, provided with suitable bypass means, and arranging at least an ATS portion between the turbine of the first stage and the turbine of the second supercharger stage and controlling the bypass means so that in steady-state operating conditions of the internal combustion engine, only one of the supercharger stages is active.

In other words, it is a twin-turbo sequential configuration, i.e. wherein the two turbochargers must operate simultaneously only in the rare transient conditions between the two aforesaid operating conditions, typical of the agricultural machines and of the operating machines.

Furthermore, the first turbine, upstream of the at least an ATS portion, is optimized with respect to the first operating condition of the internal combustion engine corresponding to low power, while the second turbine, downstream of the at least an ATS portion, is optimized for the aforesaid second operating condition of the internal combustion engine (and not for an intermediate operating condition of the internal combustion engine).

The first operating condition of the internal combustion engine corresponds to a power lower than 45% of the nominal power. The second operating condition of the internal combustion engine corresponds to a power higher than or equal to 70% of the nominal power.

Preferably, the two operating conditions are represented by non-overlapping power ranges.

Advantageously, the two turbines are sized so that each of them meets one of the two aforesaid operating conditions. Therefore, the first turbine is small and preferably twin scroll, while the second turbine is large, preferably single scroll and with a variable geometry.

By varying the size of the turbines, the above two operating conditions can be varied while keeping unchanged the concept according to which the two operating conditions are quite different and separated from each other.

In the first operating condition, hereinafter referred to as "low power", only the first turbine is operating, while in the second operating condition, referred to as "high power", only the second turbine is operating. Advantageously, the scheme does not suffer from turbo lag (the turbocharger activation delay) as the first turbine has an excellent dynamic behaviour. Furthermore, the at least an ATS portion interposed between the supercharger stages is sized to treat a gas flow corresponding to this first operating condition of the internal combustion engine, and therefore it has a reduced size if compared to a classic scheme with a single supercharger stage and ATS arranged downstream of the supercharger stage, in which the ATS is sized to meet an operating condition where the engine runs at maximum power.

When the internal combustion engine supplies maximum power, the at least an ATS portion operates upstream of the only (second) operating turbine, the first turbine having already been bypassed. Therefore, this ATS portion operates at a pressure higher than the one in the first operating condition, determined by the counterpressure generated by the second turbine. The increased density of the exhaust gases allows the at least an ATS portion, although smaller if compared to the aforesaid classic scheme, to effectively treat the pollutants contained in the exhaust gases even when the engine operates in the second operating condition, namely at higher power.

The fact that the at least an ATS portion is small allows not only an optimization of the vehicle spaces, but also an economic saving related to the precious metals usually used for the construction of catalysts and filters.

The advantage of reducing the size of the at least an ATS portion arranged between the first and the second turbine is also detectable during the transient condition. In fact, when the bypass means of the first turbine start excluding it from the exhaust line, and simultaneously the bypass means of the second turbine start including it in the exhaust line, a small ATS is pressurized more rapidly, and consequently the turbo-lag is further reduced.

If the pollution abatement performed through said at least an ATS portion were insufficient to the complete reduction of the pollutants, a second ATS portion is provided downstream of the second turbine.

This second portion may comprise, for example, another SCR, possibly with an appropriate dispenser and/or a CUC (i.e. a Clean Up Catalyst) generally used to break down the excess ammonia before it is released into the environment.

The fact that the ATS is formed by small devices, although replicated upstream and downstream of the second turbine, allows obvious advantages. In fact, the same components, having a small size and volume, can be easily housed on the vehicle and can be easily found in the automotive market, although the present implementation is clearly not automotive, with a further reduction of the components sourcing costs.

Further advantages are shown in the thermal behaviour of the proposed scheme. In the first operating condition, the at least an ATS portion having a small overall volume downstream of a first small turbine is heated rapidly, quickly reaching the activation temperature (light-off). When, on the other hand, the second turbine is active, the ATS portion operates immediately downstream of the internal combustion engine (the first turbine having been bypassed), with the advantage that the activation temperatures are always reached and maintained, and the DPF is subject to a continuous regeneration that does not require further and problematic forced regenerations.

Moreover, the fact that at maximum power the ATS portion is immediately downstream of the internal combustion engine also ensures a better vaporization of the urea-based reductant and its better mixing with the pulsed exhaust gases, thus avoiding any mixer, and consequently reducing the total counterpressure on the exhaust line of the internal combustion engine.

According to a preferred variant in which said at least an ATS portion comprises a DPF filter, a further advantage is that the second turbine operates on an exhaust gas which has already been filtered and is therefore devoid of particulates, thus allowing the use of poorer materials for the second turbine.

It is an object of the present invention a system for treating exhaust gases (ATS) and supercharging of an internal combustion engine, in particular of an agricultural vehicle in accordance with claim 1.

Moreover, it is a further object of the present invention an agricultural vehicle or a working machine comprising the above system.

A further object of the present invention is a method for sizing an aforesaid system for treating exhaust gases (ATS) and supercharging of an internal combustion engine of an agricultural vehicle.

The claims set out preferred embodiments of the invention.

### Brief description of the figures

Further objects and advantages of the present invention will become clear from the following detailed description of an exemplary embodiment (and of its variants) and from the attached data, provided for merely illustrative and nonlimiting purposes, in which:
Figure 1 shows an rpm/torque diagram of an internal combustion engine implemented in an agricultural machine or operating machine showing two most likely operating areas of the internal combustion engine;
Figure 2 shows a first preferred variant of a scheme of ATS and supercharging of an internal combustion engine of an agricultural machine according to the present invention,
Figure 3 shows a second preferred variant based on the variant of Figure 2;

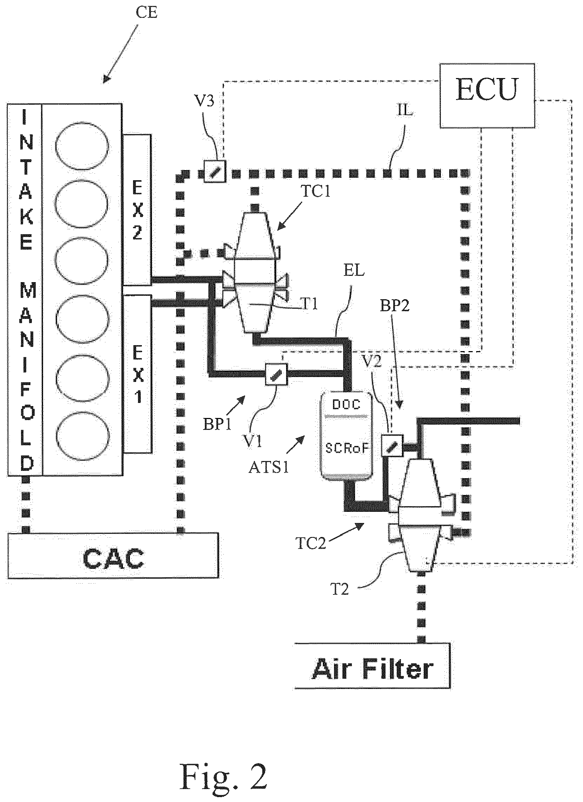

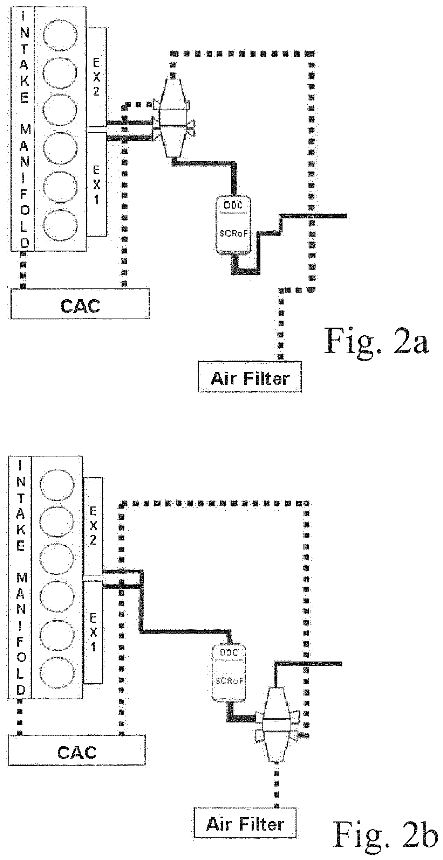

Figures 2a and 2b show the operating configuration assumed by the diagram of Figure 2 in relation to a first and a second operating condition of the internal combustion engine.

The same numbers and the same reference letters in the Figures identify the same elements or components.

In the present description, the term "second" component does not imply the presence of a "first" component. These terms are in fact only used for clarity's sake and are not intended as limiting.

### Detailed description of embodiments

Figure 2 shows an internal combustion engine EC comprising an intake line IL - shown in dashed lines - connected to the intake manifold and an exhaust line EL - indicated by the continuous line - connected to two exhaust manifolds EX1 and EX2. The engine may have a single manifold.

The preferred variant of Figure 2 includes a first supercharger stage TC1 having a first turbine T1 arranged on the exhaust line, immediately downstream of the internal combustion engine EC and related first bypass means BP1 of the first turbine T1 defined by a duct portion connecting one or more inlets of the turbine to a point of the exhaust line, downstream of the turbine T1, and a controllable valve V1.

The controllable valve V1 may be of the two-port type and thus be arranged on said bypass portion, or it may be a three-port valve arranged in a point intersecting the exhaust line EL upstream or downstream of the first turbine T1.

Obviously, "upstream" or "downstream" indicate the direction of circulation of the exhaust gases when referring to the exhaust line, or the direction of circulation of fresh air when referring to the intake line. Moreover, a second supercharger stage TC2 has a second turbine T2 arranged on said exhaust line, downstream of said first turbine T1 and related second bypass means BP2 of the second turbine that, analogously to the first turbine, comprise a controllable valve V2.

At least a first exhaust gas treatment stage ATS1 is arranged between the first turbine T1 and the second turbine T2, and processing means ECU, preferably coincident with the engine control unit, are configured to control the bypass means and to bypass the second turbine and to maintain the first turbine T1 operating when the internal combustion engine operates in a first operating condition and vice versa, to control the bypass means and to bypass the first turbine T1 and to maintain the second turbine T2 operating when the internal combustion engine operates in a second operating condition.

As shown in the figures, the first exhaust gas treatment stage ATS1 is downstream of the first bypass means BP1 and therefore it is always crossed by the exhaust gas stream regardless of the operating conditions of the first and of the second supercharger stage TC1, TC2.

Analogously, the second exhaust gas treating stage ATS2 is downstream of the second bypass means BP2, and therefore it is always crossed by the exhaust gas stream, regardless of the operating conditions of the first and of the second supercharger stage TC1, TC2.

It is obvious for the person skilled in the art that a turbine T1 or T2 is "maintained operating" when the related bypass means do not bypass the turbine. Conversely, when the bypass means bypass a turbine, it is maintained deactivated.

As described above, in the first operating condition, the internal combustion engine supplies less power if compared to the second operating condition.

The second operating condition preferably corresponds to a power close to the maximum power, namely the nominal power of the internal combustion engine.

According to a preferred aspect of the present invention, the first turbine is optimized, that is sized to operate at a related maximum efficiency, when the internal combustion engine operates in the first operating condition, namely at low power (low torque and low rpm) with a highly pulsed stream of exhaust gas from the internal combustion engine, in which the relationship between a minimum pressure value and a maximum pressure value is greater than a coefficient 2 (100%). In other words, the wheel of the first turbine has a low degree of reaction, namely action.

Analogously, the second turbine T2 is optimized - that is sized to operate at its maximum efficiency when necessary - for said second operating condition.

Since said second turbine is arranged downstream of the first ATS, i.e. ATS1, which is never bypassed, then it makes almost steady the pressure of the exhaust gas stream at the inlet of the second turbine, which is sized for a high degree of reaction, and therefore for operating at pseudo-steady pressure. "Pseudo-steady" indicates that the pressure ratio is lower than a coefficient 1.2 (20%). Moreover, the first exhaust gas treatment stage ATS1 is sized, in particular in terms of volume, for completely treating the exhaust gas flow rate corresponding to the flow rate generated in the first operating condition.

If, for example, the first stage does not include a DPF, it is evident that "the complete abatement" of pollutants refers only to HC, particulate and NOx, leaving the second stage to deal with, for example, excess ammonia.

The second exhaust gas treating stage does not contribute, or contributes only in terms of ammonia abatement, while being always operatively connected to the exhaust line.

On the contrary, in the second operating condition, the first turbine is deactivated in favour of the second one, and therefore the gas thermal content and the gas flow rate is such that the second exhaust gas treating stage ATS2 complements the first stage ATS1 in abating those species of pollutants partially treated by the first treatment stage ATS1, such as for example NOx, and in abating the excess ammonia. The main advantage of the present solution is that it allows dedicating the ATS1 to those pollutants whose abatement is more sensitive to the ATS operating temperature.

Preferably, this first treatment stage ATS1 comprises a DOC and/or a DPF and/or SCR or a SCRoF (SCR on Filter, for explanations see for example EP2042227) with its related dosing device of a urea-based reductant arranged upstream of the SCR. This scheme is particularly advantageous but not compulsory if the internal combustion engine is a Diesel engine.

Therefore, the first exhaust gas treatment stage ATS1 arranged downstream of the first turbine and upstream of the second turbine comprises
- only a DOC or
- a DOC upstream of an SCR with a related dosing device of a urea-based reductant or
- a DOC, a DPF downstream of said DOC and a SCR downstream of said DPF with a related dosing device of a urea-based reductant or
- a DOC, a SCRoF downstream of said DOC.

Otherwise, said first treatment stage ATS1 comprises a 3WC (three-way catalyst), especially when the internal combustion engine is an Otto cycle engine.

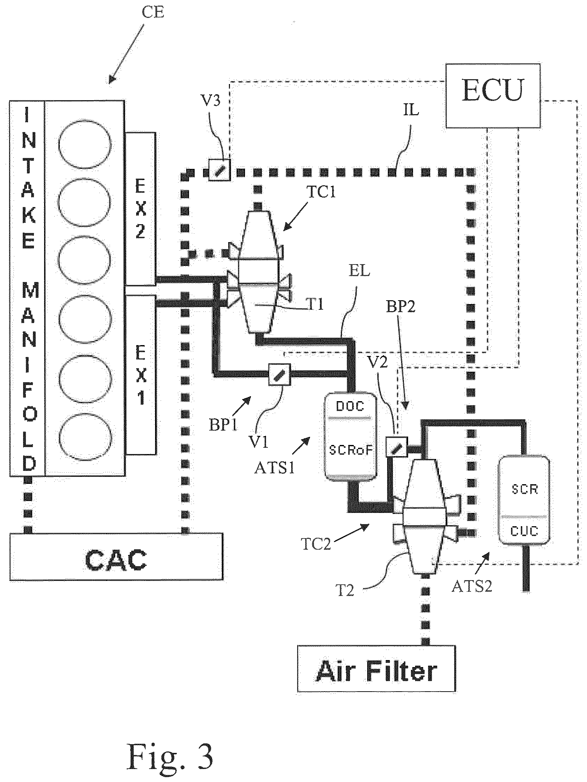

According to the preferred variant of Figure 3, it is provided a second exhaust gas treating stage ATS2 arranged downstream of the second turbine T2, preferably comprising
- an SCR with a related dosing device of a urea-based reductant or
- an SCR with a related dosing device of a urea-based reductant and a CUC arranged downstream of the SCR, or
- a DPF and an SCR, with a related dosing device of a urea-based reductant, arranged downstream of the DPF, or
- a DPF and an SCR, with a related dosing device of a urea-based reductant arranged downstream of the DPF and a CUC arranged downstream of the SCR.

Said second treatment stage ATS2 may include components different from the aforesaid, and may be combined with the variant in which the first treatment stage ATS1 comprises a 3WC.

For both variants, it is preferable that the first turbine T1 is single scroll or is twin scroll in which each scroll is connected to a separate exhaust manifold EX1 or EX2 of the internal combustion engine EC and/or the second turbine T2 is single scroll and is preferably a variable geometry turbine.

Both variants may provide a controllable or automatic valve V3 arranged on the intake line of the internal combustion engine to bypass the compressor of the first supercharger stage TC1, arranged between the inlet and the outlet of the first compressor.

This case is subject to the same considerations made for the V1 valve. The opening and closing of the valves V1 and V3 is always coordinated, in the sense that both are simultaneously closed or opened, depending on whether the first turbine is relatedly operating or bypassed.

The scheme may also include a single compressed air cooler arranged on the intake line IL immediately upstream of the intake manifold. Moreover, the schema may comprise an air filter arranged upstream of the whole intake line IL.

The second turbine T2 is bypassed and the first turbine T1 is maintained operating when the internal combustion engine operates in the aforesaid first operative condition and the first turbine T1 is bypassed and the second turbine T2 is maintained operating when the internal combustion engine operates in said second operating condition.

These two different operating conditions are summarized in Figures 2a and 2b in which, starting from Figure 2, the inactive components and the valves have been deleted for easier understanding.

Preferably, only during the transient conditions the bypass means can be controlled so as to maintain simultaneously operating both the first and the second turbine T1 and T2 to facilitate the passage of the internal combustion engine from the first operating condition to the second operating condition and vice versa.

According to what described in the present description, it is correct defining the first operating condition in which the internal combustion engine CE supplies less power at a lower rpm if compared to a second operating condition, sizing the first turbine T1 in order to operate at a related maximum efficiency when the internal combustion engine operates in the first operating condition and sizing the second turbine T2 in order to operate at a related maximum efficiency when the internal combustion engine operates in the second operating condition.

The present invention can be advantageously carried out by a computer program that comprises coding means for implementing one or more steps of the method, when this program is run on a computer.

## Claims

1. A system for treating exhaust gases and supercharging of an internal combustion engine (CE), in particular of an agricultural vehicle, the internal combustion engine (CE) comprising an intake line (IL) and an exhaust line (EL), the system being adapted to be operatively connected to said exhaust line and comprising:
- a first supercharger stage (TC1) having a first turbine (T1) arranged on said exhaust line immediately downstream of the internal combustion engine (CE) and related first bypass means (BP1) of the first turbine,
- a second supercharger stage (TC2) having a second turbine (T2) arranged on said exhaust line downstream of said first turbine (T1) and related second bypass means (BP2) of the second turbine, and
- an exhaust gas post-treatment system consisting of a first exhaust gas treatment stage (ATS1) and a second exhaust gas treatment stage (ATS2),
wherein the first exhaust gas treatment stage (ATS1) is arranged between said first (T1) and said second turbine (T2), downstream of said first bypass means,
and wherein the first turbine (T1) has a smaller size than the second turbine (T2).
**characterized by** further comprising
- processing means (ECU) configured to control said first and second bypass means (BP1, BP2) so as to bypass said second turbine and maintain only said first turbine (T1) operating when the internal combustion engine operates in a first operating condition and to bypass said first turbine (T1) and maintain only said second turbine (T2) operating when the internal combustion engine operates in a second operating condition; wherein the internal combustion engine supplies less power when it is in said first operating condition if compared to when it is in said second operating condition,
and in that the second exhaust gas treatment stage (ATS2) is arranged downstream of said second bypass means (BP2).

2. A system according to claim 1, wherein, in said second operating condition, said internal combustion engine supplies approximately maximum power.

3. A system according to claim 1 or 2, wherein said first turbine is sized to operate at a related maximum efficiency when the internal combustion engine is in said first operating condition, and an exhaust gas stream produced by it is pulsed.

4. A system according to any one of claims 1-3, wherein said second turbine is sized to operate at a related maximum efficiency when the internal combustion engine is in said second operating condition, and an exhaust gas stream produced by it is under pseudo-steady pressure due to the first exhaust gas treatment stage (ATS1).

5. A system according to any one of the preceding claims, wherein said first exhaust gas treatment stage (ATS) is sized to treat an exhaust gas flow rate corresponding to said first operating condition, and wherein said second exhaust gas treatment stage (ATS2) is sized to complement said first exhaust gas treatment stage in said second operating condition.

6. A system according to any one of the preceding claims, wherein said first exhaust gas treatment stage (ATS1) arranged downstream of said first turbine and upstream of said second turbine comprises:
- only a DOC, or
- a DOC upstream of an SCR with a related dosing device of a urea-based reductant, or
- a DOC, a DPF downstream of said DOC and an SCR downstream of said DPF with a related dosing device of a urea-based reductant, or
- a DOC, an SCRoF downstream of said DOC, or
- a 3WC.

7. A system according to any one of the preceding claims, wherein said second exhaust gas treatment stage (ATS2) comprises:
- an SCR with a related dosing device of a urea-based reductant, or
- an SCR with a related dosing device of a urea-based reductant and a CUC arranged downstream of the SCR, or
- a DPF and an SCR, with a related dosing device of a urea-based reductant, arranged downstream of the DPF, or
- a DPF and an SCR, with a related dosing device of a urea-based reductant, arranged downstream of the DPF and a CUC arranged downstream of the SCR.

8. A system according to the preceding claims 1-4, wherein said first exhaust gas treatment stage (ATS1) is sized to completely treat first pollutants contained in an exhaust gas stream corresponding to said first operating condition and wherein said second exhaust gas treatment stage (ATS2) is sized to complement said first exhaust gas treatment stage in said second operating condition in treating said first pollutants.

9. A system according to claim 8, wherein said second exhaust gas treatment stage (ATS2) is sized to treat second pollutants, different from said first pollutants, both in said first operating condition and in said second operating condition.

10. A system according to claim 8 or 9, wherein said first pollutants are HC and particulate or wherein said second pollutants are ammonia.

11. A system according to claim 10, wherein said first and second exhaust gas treating stage can abate the NOx and wherein said first stage can completely abate the NOx in said first operating condition.

12. A system according to any one of the preceding claims, wherein:
- said first turbine (T1) is single scroll or is twin scroll, in which each scroll is connected to a distinct exhaust manifold of said internal combustion engine (CE) and in which said first turbine is sized to operate at pressure pulses and/or
- said second turbine (T2) is single scroll and is preferably a variable geometry turbine, and is sized to operate at a steady pressure of the exhaust gas.

13. A method for sizing a system for treating exhaust gases and supercharging of an internal combustion engine (CE), in particular of an agricultural vehicle, according to any one of claim 1-9, comprising the following steps:
- defining a first operating condition in which the internal combustion engine (CE) supplies less power at a lower rpm if compared to a second operating condition,
- sizing said first turbine (T1) to operate at a related maximum efficiency when the internal combustion engine operates in said first operating condition and to operate at pressure pulses, and
- sizing said second turbine (T2) to operate at a related maximum efficiency when the internal combustion engine operates in said second operating condition and at a steady pressure of the exhaust gases, and
- sizing said first exhaust gas treatment stage (ATS1), so that a related volume is strictly sufficient to treat an exhaust gas flow rate corresponding to said first operating condition.

14. An agricultural machine or operating machine comprising a system for treating exhaust gases and supercharging of a related internal combustion engine (CE) according to any one of claims 1-9.

## Patentansprüche

1. System zum Behandeln von Abgasen und zum Aufladen einer Brennkraftmaschine (CE), insbesondere einer Landmaschine, wobei die Brennkraftmaschine (CE) eine Einlassleitung (IL) und eine Auslassleitung (EL) umfasst, wobei das System dafür ausgelegt ist, mit der Auslassleitung funktional verbunden zu werden, und Folgendes umfasst:
- eine erste Laderstufe (TC1) mit einer ersten Turbine (T1), die unmittelbar auslassseitig der Brennkraftmaschine (CE) in der Auslassleitung angeordnet ist und zu ersten Umgehungsmitteln (BP1) der ersten Turbine gehört,
- eine zweite Laderstufe (TC2) mit einer zweiten Turbine (T2), die auslassseitig der ersten Turbine (T1) in der Auslassleitung angeordnet ist und zu zweiten Umgehungsmitteln (BP2) der zweiten Turbine gehört, und
- ein Abgas-Nachbehandlungssystem, das aus einer ersten Abgasbehandlungsstufe (ATS1) und aus einer zweiten Abgasbehandlungsstufe (ATS2) besteht,
wobei die erste Abgasbehandlungsstufe (ATS1) zwischen der ersten (T1) und der zweiten Turbine (T2) auslassseitig der ersten Umgehungsmittel angeordnet ist,
und wobei die erste Turbine (T1) eine kleinere Größe als die zweite Turbine (T2) aufweist,
**dadurch gekennzeichnet, dass** das System ferner umfasst:
- Verarbeitungsmittel (ECU), die dafür konfiguriert sind, das erste und das zweite Umgehungsmittel (BP1, BP2) in der Weise zu steuern, dass die zweite Turbine umgangen wird und nur die erste Turbine (T1) in Betrieb gehalten wird, wenn die Brennkraftmaschine in einem ersten Betriebszustand arbeitet, und dass die erste Turbine (T1) umgangen wird und nur die zweite Turbine (T2) in Betrieb gehalten wird, wenn die Brennkraftmaschine in einem zweiten Betriebszustand arbeitet; wobei die Brennkraftmaschine im ersten Betriebszustand weniger Leistung als im zweiten Betriebszustand liefert,
und dass die zweite Abgasbehandlungsstufe (ATS2) auslassseitig des zweiten Umgehungsmittels (BP2) angeordnet ist.

2. System nach Anspruch 1, wobei die Brennkraftmaschine im zweiten Betriebszustand näherungsweise maximale Leistung zuführt.

3. System nach Anspruch 1 oder 2, wobei die erste Turbine dafür bemessen ist, mit einem zugehörigen maximalen Wirkungsgrad zu arbeiten, wenn die Brennkraftmaschine in dem ersten Betriebszustand ist und ein durch sie erzeugter Abgasstrom gepulst ist.

4. System nach einem der Ansprüche 1-3, wobei die zweite Turbine dafür bemessen ist, mit einem zugehörigen maximalen Wirkungsgrad zu arbeiten, wenn die Brennkraftmaschine in dem zweiten Betriebszustand ist und ein durch sie erzeugter Abgasstrom wegen der ersten Abgasbehandlungsstufe (ATS1) unter pseudostationärem Druck ist.

5. System nach einem der vorhergehenden Ansprüche, wobei die erste Abgasbehandlungsstufe (ATS) dafür bemessen ist, eine Abgasdurchflussmenge zu behandeln, die dem ersten Betriebszustand entspricht, und wobei die zweite Abgasbehandlungsstufe (ATS2) dafür bemessen ist, die erste Abgasbehandlungsstufe in dem zweiten Betriebszustand zu ergänzen.

6. System nach einem der vorhergehenden Ansprüche, wobei die erste Abgasbehandlungsstufe (ATS1), die auslassseitig der ersten Turbine und einlassseitig der zweiten Turbine angeordnet ist, Folgendes umfasst:
- nur einen DOC, oder
- einen DOC einlassseitig eines SCR mit einer zugehörigen Dosiervorrichtung eines Reduktionsmittels auf Harnstoffgrundlage, oder
- einen DOC, einen DPF auslassseitig des DOC und einen SCR auslassseitig des DPF mit einer zugehörigen Dosiervorrichtung eines Reduktionsmittels auf Harnstoffgrundlage, oder
- einen DOC, einen SCRoF auslassseitig des DOC, oder
- einen 3WC.

7. System nach einem der vorhergehenden Ansprüche, wobei die zweite Abgasbehandlungsstufe (ATS2) Folgendes umfasst:
- einen SCR mit einer zugehörigen Dosiervorrichtung eines Reduktionsmittels auf Harnstoffgrundlage, oder
- einen SCR mit einer zugehörigen Dosiervorrichtung eines Reduktionsmittels auf Harnstoffgrundlage und einen auslassseitig des SCR angeordneten CUC, oder
- einen DPF und einen SCR mit einer zugehörigen Dosiervorrichtung eines Reduktionsmittels auf Harnstoffgrundlage, der auslassseitig des DPF angeordnet ist, oder
- einen DPF und einen SCR mit einer zugehörigen Dosiervorrichtung eines Reduktionsmittels auf Harnstoffgrundlage, der auslassseitig des DPF angeordnet ist, und einen CUC, der auslassseitig des SCR angeordnet ist.

8. System nach einem der vorhergehenden Ansprüche 1-4, wobei die erste Abgasbehandlungsstufe (ATS1) dafür bemessen ist, erste Schadstoffe, die in einem Abgasstrom enthalten sind, der dem ersten Betriebszustand entspricht, vollständig zu behandeln, und wobei die zweite Abgasbehandlungsstufe (ATS2) dafür bemessen ist, die erste Abgasbehandlungsstufe in dem zweiten Betriebszustand beim Behandeln der ersten Schadstoffe zu ergänzen.

9. System nach Anspruch 8, wobei die zweite Abgasbehandlungsstufe (ATS2) dafür bemessen ist, sowohl in dem ersten Betriebszustand als auch in dem zweiten Betriebszustand zweite Schadstoffe zu behandeln, die von den ersten Schadstoffen verschieden sind.

10. System nach Anspruch 8 oder 9, wobei die ersten Schadstoffe HC und Schwebstoffe sind oder wobei die zweiten Schadstoffe Ammoniak sind.

11. System nach Anspruch 10, wobei die erste und die zweite Abgasbehandlungsstufe das NOx verringern können und wobei die erste Stufe das NOx in dem ersten Betriebszustand vollständig verringern kann.

12. System nach einem der vorhergehenden Ansprüche, wobei:
- die erste Turbine (T1) eine Turbine mit Spiralgehäuse oder eine Turbine mit zwei Spiralgehäusen, in der jedes Spiralgehäuse mit einem anderen Abgaskrümmer der Brennkraftmaschine (CE) verbunden ist, ist und in der die erste Turbine dafür bemessen ist, bei Druckimpulsen zu arbeiten, und/oder
- die zweite Turbine (T2) eine Turbine mit Spiralgehäuse ist und vorzugsweise eine Turbine mit variabler Geometrie ist und dafür bemessen ist, bei einem stationären Druck des Abgases zu arbeiten.

13. Verfahren für die Bemessung eines Systems für die Behandlung von Abgasen und für das Laden einer Brennkraftmaschine (CE), insbesondere einer Landmaschine, nach einem der Ansprüche 1-9, wobei das Verfahren die folgenden Schritte umfasst:
- Definieren eines ersten Betriebszustands, in dem die Brennkraftmaschine (CE) bei einer niedrigeren Drehzahl als in einem zweiten Betriebszustand weniger Leistung liefern,
- Bemessen der ersten Turbine (T1) dafür, dass sie bei einem zugehörigen maximalen Wirkungsgrad arbeitet, wenn die Brennkraftmaschine in dem ersten Betriebszustand arbeitet, und dass sie mit Druckimpulsen arbeitet, und
- Bemessen der zweiten Turbine (T2) dafür, dass sie mit einem zugehörigen maximalen Wirkungsgrad arbeitet, wenn der Brennkraftmaschine in dem zweiten Betriebszustand und bei einem stationären Druck der Abgase arbeitet, und
- Bemessen der ersten Abgasbehandlungsstufe (ATS1) in der Weise, dass ein zugehöriges Volumen für die Behandlung einer Abgasdurchflussmenge, die dem ersten Betriebszustand entspricht, streng ausreicht.

14. Landmaschine oder Arbeitsmaschine, die ein System zum Behandeln von Abgasen und zum Laden einer zugehörigen Brennkraftmaschine (CE) nach einem der Ansprüche 1-9 umfasst.

## Revendications

1. Système pour le traitement de gaz d'échappement et la suralimentation d'un moteur à combustion interne (CE), en particulier d'un véhicule agricole, le moteur à combustion interne (CE) comprenant une conduite d'admission (IL) et une conduite d'échappement (EL), le système étant adapté pour être relié fonctionnellement à ladite conduite d'échappement et comprenant :
- un premier étage de compresseur de suralimentation (TC1) ayant une première turbine (T1) agencée sur ladite conduite d'échappement immédiatement en aval du moteur à combustion interne (CE) et d'un premier moyen de dérivation (BP1) associé de la première turbine,
- un second étage de compresseur de suralimentation (TC2) ayant une seconde turbine (T2) agencée sur ladite conduite d'échappement en aval de ladite première turbine (T1) et d'un second moyen de dérivation (BP2) associé de la seconde turbine, et
- un système de post-traitement de gaz d'échappement consistant en un premier étage de traitement de gaz d'échappement (ATS1) et un second étage de traitement de gaz d'échappement (ATS2),
dans lequel le premier étage de traitement de gaz d'échappement (ATS1) est agencé entre ladite première (T1) et ladite seconde turbine (T2), en aval dudit premier moyen de dérivation,
et dans lequel la première turbine (T1) a une plus petite taille que la seconde turbine (T2),
**caractérisé en ce qu'**il comprend en outre
- un moyen de déroulement (ECU) configuré pour commander lesdits premier et second moyens de dérivation (BP1, BP2) de manière à dériver ladite seconde turbine et maintenir uniquement ladite première turbine (T1) en fonctionnement lorsque le moteur à combustion interne fonctionne dans une première condition de fonctionnement et pour dériver ladite première turbine (T1) et maintenir uniquement ladite seconde turbine (T2) en fonctionnement lorsque le moteur à combustion interne fonctionne dans une seconde condition de fonctionnement ; dans lequel le moteur à combustion interne fournit moins de puissance lorsqu'il est dans ladite première condition de fonctionnement comparé à lorsqu'il est dans ladite seconde condition de fonctionnement,
et **en ce que** le second étage de traitement de gaz d'échappement (ATS2) est agencé en aval dudit second moyen de dérivation (BP2).

2. Système selon la revendication 1, dans lequel, dans ladite seconde condition de fonctionnement, ledit moteur à combustion interne fournit approximativement une puissance maximale.

3. Système selon la revendication 1 ou 2, dans lequel ladite première turbine est dimensionnée pour fonctionner à un rendement maximal associé lorsque le moteur à combustion interne est dans ladite première condition de fonctionnement, et un flux de gaz d'échappement produit par lui est pulsé.

4. Système selon l'une quelconque des revendications 1 à 3, dans lequel ladite seconde turbine est dimensionnée pour fonctionner à un rendement maximal associé lorsque le moteur à combustion interne est dans ladite seconde condition de fonctionnement, et un flux de gaz d'échappement produit par lui est sous une pression pseudostable en raison du premier étage de traitement de gaz d'échappement (ATS1).

5. Système selon l'une quelconque des revendications précédentes, dans lequel ledit premier étage de traitement de gaz d'échappement (ATS) est dimensionné pour traiter un débit de gaz d'échappement correspondant à ladite première condition de fonctionnement, et dans lequel ledit second étage de traitement de gaz d'échappement (ATS2) est dimensionné pour compléter ledit premier étage de traitement de gaz d'échappement dans ladite seconde condition de fonctionnement.

6. Système selon l'une quelconque des revendications précédentes, dans lequel ledit premier étage de traitement de gaz d'échappement (ATS1) agencé en aval de ladite première turbine et en amont de ladite seconde turbine comprend :
- uniquement un DOC, ou
- un DOC en amont d'un SCR avec un dispositif de dosage associé d'un réducteur à base d'urée, ou
- un DOC, un DPF en aval dudit DOC et un SCR en aval dudit DPF avec un dispositif de dosage associé d'un réducteur à base d'urée, ou
- un DOC, un SCRoF en aval dudit DOC, ou
- un 3WC.

7. Système selon l'une quelconque des revendications précédentes, dans lequel ledit second étage de traitement de gaz d'échappement (ATS2) comprend :
- un SCR avec un dispositif de dosage associé d'un réducteur à base d'urée, ou
- un SCR avec un dispositif de dosage associé d'un réducteur à base d'urée et un CUC agencé en aval du SCR, ou
- un DPF et un SCR, avec un dispositif de dosage associé d'un réducteur à base d'urée, agencé en aval du DPF, ou
- un DPF et un SCR, avec un dispositif de dosage associé d'un réducteur à base d'urée, agencé en aval du DPF et un CUC agencé en aval du SCR.

8. Système selon les revendications précédentes 1 à 4, dans lequel ledit premier étage de traitement de gaz d'échappement (ATS1) est dimensionné pour traiter complètement des premiers polluants contenus dans un flux de gaz d'échappement correspondant à ladite première condition de fonctionnement et dans lequel ledit second étage de traitement de gaz d'échappement (ATS2) est dimensionné pour compléter ledit premier étage de traitement de gaz d'échappement dans ladite seconde condition de fonctionnement dans le traitement desdits premiers polluants.

9. Système selon la revendication 8, dans lequel ledit second étage de traitement de gaz d'échappement (ATS2) est dimensionné pour traiter des seconds polluants, différents desdits premiers polluants, à la fois dans ladite première condition de fonctionnement et dans ladite seconde condition de fonctionnement.

10. Système selon la revendication 8 ou 9, dans lequel lesdits premiers polluants sont du HC et des particules ou dans lequel lesdits seconds polluants sont de l'ammoniaque.

11. Système selon la revendication 10, dans lequel lesdits premier et second étages de traitement de gaz d'échappement peuvent diminuer le NOx et dans lequel ledit premier étage peut diminuer complètement le NOx dans ladite première condition de fonctionnement.

12. Système selon l'une quelconque des revendications précédentes, dans lequel :
- ladite première turbine (T1) est à une seule entrée ou est à double entrée, dans laquelle chaque entrée est reliée à un collecteur d'échappement distinct dudit moteur à combustion interne (CE) et dans laquelle ladite première turbine est dimensionnée pour fonctionner à des impulsions de pression et/ou
- ladite seconde turbine (T2) est à une seule entrée et est de préférence une turbine à géométrie variable, et est dimensionnée pour fonctionner à une pression stable du gaz d'échappement.

13. Méthode pour dimensionner un système pour le traitement de gaz d'échappement et la suralimentation d'un moteur à combustion interne (CE), en particulier d'un véhicule agricole, selon l'une quelconque des revendications 1 à 9, comprenant les étapes suivantes :
- la définition d'une première condition de fonctionnement dans laquelle le moteur à combustion interne (CE) fournit moins de puissance à un nombre de tours par minute plus faible comparé à une seconde condition de fonctionnement,
- le dimensionnement de ladite première turbine (T1) pour fonctionner à un rendement maximal associé lorsque le moteur à combustion interne fonctionne dans ladite première condition de fonctionnement et pour fonctionner à des impulsions de pression, et
- le dimensionnement de ladite seconde turbine (T2) pour fonctionner à un rendement maximal associé lorsque le moteur à combustion interne fonctionne dans ladite seconde condition de fonctionnement et à une pression stable des gaz d'échappement, et
- le dimensionnement dudit premier étage de traitement de gaz d'échappement (ATS1), de sorte qu'un volume associé soit strictement suffisant pour traiter un débit de gaz d'échappement correspondant à ladite première condition de fonctionnement.

14. Machine agricole ou machine de fonctionnement comprenant un système pour le traitement de gaz d'échappement et la suralimentation d'un moteur à combustion interne (CE) associé selon l'une quelconque des revendications 1 à 9.
